Europäisches Patentamt

European Patent Office

Office européen des brevets

(19)

(11) Veröffentlichungsnummer: **0 278 292**
**B1**

(12)

# EUROPÄISCHE PATENTSCHRIFT

(45) Veröffentlichungstag der Patentschrift:
22.08.90

(21) Anmeldenummer: 88100966.6

(22) Anmeldetag: 22.01.88

(51) Int. Cl.⁵: **F16D 1/06**, F16H 53/02,
B23P 11/00, B21D 53/84

(54) Hohlwelle sowie Verfahren zu ihrer Herstellung.

(30) Priorität: 10.02.87 DE 3704092

(43) Veröffentlichungstag der Anmeldung:
17.08.88 Patentblatt 88/33

(45) Bekanntmachung des Hinweises auf die Patenterteilung:
22.08.90 Patentblatt 90/34

(84) Benannte Vertragsstaaten:
AT BE CH DE ES FR GB IT LI NL SE

(56) Entgegenhaltungen:
DE-A- 2 336 241
DE-A- 3 616 901
FR-A- 2 469 610
FR-A- 2 488 354

(73) Patentinhaber: GESENKSCHMIEDE SCHNEIDER GMBH,
Ulmer Strasse 112, D-7080 Aalen(DE)

(72) Erfinder: Ebbinghaus, Alfred, Schellingstrasse 78,
D-7080 Aalen(DE)
Erfinder: Bögel, Helmut, Gabelsbergerstrasse 10,
D-7080 Aalen(DE)

(74) Vertreter: Neidl-Stippler, Cornelia, Dr., Rauchstrasse 2,
D-8000 München 80(DE)

## Beschreibung

Die Erfindung bezieht sich auf eine Hohlwelle mit Drehmoment übertragenden Konstruktionselementen wie Zahnrädern, Kurven, Nocken od. dgl. sowie gegebenenfalls Nebenformelementen, wie Lagerstellen, Anschlagflächen, Sechskant- oder Ringkonturen od. dgl., aus einem Ausgangsrohr mit im wesentlichen gleicher Wandstärke, das zur kraft- und formschlüssigen Verbindung mit den Konstruktionselementen und zur Ausformung der Nebenformelemente durch Innendruck aufgeweitet ist, wobei die maximale Aufweitung des Rohrs unter den Konstruktionselementen bzw. an den Nebenformelementen vorliegt.

Hohlwellen, die im Wege des Fügens aus mehreren Teilen hergestellt sind, werden auch als gebaute Hohlwellen bezeichnet.

Aus der DE-A 34 09 541 ist eine Hohlwelle bekannt geworden, bei der die Konstruktionselemente durch Aufbringen von Innendruck mit dem Rohr kraftschlüssig verbunden werden. Dabei wird das Rohr zwischen den Konstruktionselementen weiter aufgeweitet als unter diesen, so daß sich zwingenderweise unter den Kondstruktionselementen eine dickere Wandstärke des Rohres als zwischen diesen ergibt. Das dort beschriebene Verfahren setzt relativ hohe Wandstärken des Innenrohrs voraus, das in seiner Stärke zwischen den Konstruktionselementen verringert wird.

Aus der DE-C 25 46 802 sind Nockenwellen für Hubkolbenmaschinen mit den gattungsbildenden Merkmalen bekannt geworden, bei denen das Innenrohr in einem solchen Maße ver formt ist, daß seine Außenwand in innenseitig der Lagerringe, Nocken od. dgl. vorgesehene Nuten reicht und derart ein Formschluß erzielt wird. Auch hier ist die Verwendung von relativ leicht verformbaren Rohren zum Erzielen eines reinen Formschlusses notwendig, wobei die maximale Aufweitung des Rohres unter den Konstruktionselementen erfolgt; es findet bei dieser Hohlwelle ein Abnehmen der Innenrohrwandstärke unter den Konstruktionselementen statt, was zu einer Schwächung des Rohres unter diesen führt. Daher ist es notwendig, insgesamt ein Innenrohr mit einer entsprechend hohen Wandstärke zu verwenden.

Demgegenüber soll die Aufgabe gelöst werden, Hohlwellen mit kraftübertragenden Konstruktionselementen herzustellen, die die Übertragung eines höheren Drehmoments unter Gewichtseinsparung bei Einsatz preiswerter Ausgangsteile ermöglichen.

Die Aufgabe wird dadurch bei einer gattungsgemäßen Hohlwelle erfindungsgemäß gelöst daß die Wandstärke des Rohrs unter den Konstruktionselementen und gegebenenfalls Nebenformelementen gegenüber der Wandstärke des Ausgangsrohres durch Materialführung in axialer Richtung partiell vergrößert ist. Dabei ist es vorteilhaft, wenn die Materialanhäufung im Rohr unter den Konstruktionselementen zwischen 1 bis 10 %, bevorzugt zwischen 2 und 8 % und ganz besonders bevorzugt zwischen 3 und 7,5 %, berechnet auf Grundlage der Wandstärke des Ausgangsrohrs, beträgt. Diese Materialanhäufung läßt sich ohne Beeinträchtigung eines günstigen Faserverlaufs im Rohr unter Erzielung einer gegenüber dem Stand der Technik verbesserten Befestigung der Konstruktionse-lemente tei leichterem Gewicht, als bisher möglich, erreichen.

Bevorzugt weist das Rohr ein oder mehrere aus dem Rohr geformte Nebenformelemente auf, wobei hier unter Nebenformelementen Sechskantkontur, Mitnehmerkontur od. dgl., die aus Bereichen des Rohrs mit besonderer Außengestalt bestehen, verstanden werden.

Derartige Nebenformkonturen konnten mittels der bisher bekannten Verfahren nicht gleichzeitig mit dem Fügen von Konstruktionselementen hergestellt werden und erforderten zusätzliche aufwendige Nacharbeiten zur Anbringung bspw. von Sechskantprofilen an Hohlwellen, die für deren Handhabung im Kfz-Bereich notwendig sind. Die Nebenformelemente können dabei so gestaltet sein, daß auch sie eine Wandverstärkung gegenüber der ursprünglichen Rohrwandstärke aufweisen, die Ausformung kann aber auch so erfolgen - abhängig von der Belastung und der Außenform des Formelementes - daß die Wandstärke des Nebenformelementes in etwa gleich der ursprünglichen Rohrwandstärke ist oder etwas darunter liegt. Jedenfalls können nach der Erfindung gleichzeitig mit der Befestigung von Konstruktionselementen ausgeformte Nebenformelemente an einem Rohr vorgesehen werden, wodurch sich die Herstellungskosten erheblich senken lassen.

Es hat sich gezeigt, daß erfindungsgemäß die Anformung von Lagerstellen aus dem Rohr möglich ist, wobei sich ein größeres Lager durch Anfügen eines Rings herstellen läßt.

Die Konstruktionselemente können im wesentlichen Hartguß, Schalenhartguß, Sinterstahl, Stahl (z.B. Feinstanzteil oder Profilstahl), Aluminium, Titan, Keramik oder Kunststoff sein. Dadurch können besonders verschleißfeste oder auch leichte Materialien, ggf. auch für besondere Anwendungszwecke Kunststoffe mit besonderen Eigenschaften eingesetzt werden, deren Materialeigenschaften ohne große Abhängigkeit vom übrigen Hohlwellenmaterial ausgewählt werden können. Dies stellt insbesondere gegenüber den herkömmlichen gegossenen Wellen einen erheblichen Fortschritt dar.

Die Öffnung der Konstruktionselemente kann oval, polygonförmig oder sonst unrund, aber auch rund sein. Bei unrunder oder auch polygonförmiger Öffnung tritt beim Aufweiten des Innenrohrs noch eine zusätzliche Befestigung der Konstruktionselemente durch Formschluß des Konstruktionselementes mit der im Innenrohr gebildeten unrunden Ausbauchung ein, die eine zusätzliche Befestigung bewirkt und die Übertragung höherer Kräfte ermöglicht.

Die erfindungsgemäßen Hohlwellen mit den darauf befestigten Konstruktionselementen lassen sich ohne genaue Passungen an den Fügeflächen, das heißt den Kontaktflächen zwischen Konstruktionselementinnenwand und Rohraußenwand herstellen. Die Fügeflächen der Fügeteile können daher ohne Nacharbeit bleiben. Da alle äußeren Fügeteile mit ihrer Außenkontur in einem Werkzeug fixiert werden, ist auch bei Bohrungsversatz der äußeren Fügeteile nur eine geringe Form- und Lageabweichung gegeben. Wenn die Form der Nockenöffnung nicht völlig an die Außenkontur des innenliegenden Rohres angepaßt ist, ergibt sich eine kraft- und formschlüssige Verbindung, die bei derartigen Wellen überlegene Kraftübertragungseigenschaften bewirkt.

Gleichzeitig ergibt sich dadurch, daß größere Öffnungen als notwendig in den Konstruktionselementen vorgesehen werden, als notwendig, bspw. ovale statt kreisrunde Öffnungen, eine weitere Gewichtsreduzierung.

Bei anderen Anforderungen kann es preisgünstig sein, Konstruktionselemente mit leicht herstellbaren runden Innenbohrungen einzusetzen.

Das erfindungsgemäße Verfahren zur Herstellung einer gattungsgemäßen Hohlwelle weist folgende Schritte auf: Einlegen der/s Konstruktionselemente/s und eines durch die Innenöffnung der konstruktionselemente geschobenen Rohres in eine Form; Schließen der Form; Schließen der Rohrstirnseiten und Aufbringen eines zur Verformung des Rohrmaterials ausreichenden Druck im Inneren des Rohres, wobei gleichzeitig mit der Aufbringung von Innendruck Axialkräfte auf das Rohr unter Materialnachführung in Richtung der Rohrachse aufgebracht werden.

Vorteilhafterweise kann das Nachführen des Materials mittels in Rohrachsenrichtung bewegbarer Werkzeugelemente erfolgen.

Ein weiterer Vorteil der erfindungsgemäßen gebauten Hohlwelle besteht darin, daß sie durch die unterschiedlich verformten Rohrzonen Drehschwingungen vermeidet.

Eine mehrfache unterschiedliche Verformung des Rohres (unter den Nocken bei einer ovalen Nockenbohrung bspw. oval, Lagernstellen ausgebaucht etc.) bewirkt, daß auch aus dünnen Rohren steife Wellen herstellbar sind.

Außerdem kann das Rohr zwischen den Fügeteilen verformt werden, z.B. Versteifungsrippen ausgebildet werden.

Durch die Materialanhäufung unter den kritischen Verbindungsstellen ist die Stabilität der im Umformverfahren aufgezwungenen Form zusätzlich erhöht und werden Druck spannungen aufgebracht, was wiederum zu einer erhöhten Sicherheit der Konstruktionselementbefestigung führt.

Einige Ausführungsformen der Erfindung werden nachstehend unter Bezugnahme auf die begleitende Zeichnung zum besseren Verständnis der Erfindung näher erläutert. Dabei zeigen:

Fig. 1: eine schematische Darstellung einer bevorzugten Ausführungsform einer erfindungsgemäßen hohlen Nockenwelle im Längsschnitt.

Fig. 2: einen Querschnitt durch einen Nockender Hohlwelle gemäß Fig. 1 entlang der Linie A-A

Fig. 3: einen Querschnitt durch ein Lager der Hohlwelle gemäß Fig. 1 entlang der Linie B-B der Fig. 1:

Fig. 4: einen Querschnitt durch einen angeformten Sechskant der Hohlwelle gemäß Fig. 1 entlang der Linie C-C, und

Fig. 5: eine perspektivische Darstellung einer erfindungsgemäßen hohlen Nockenwelle.

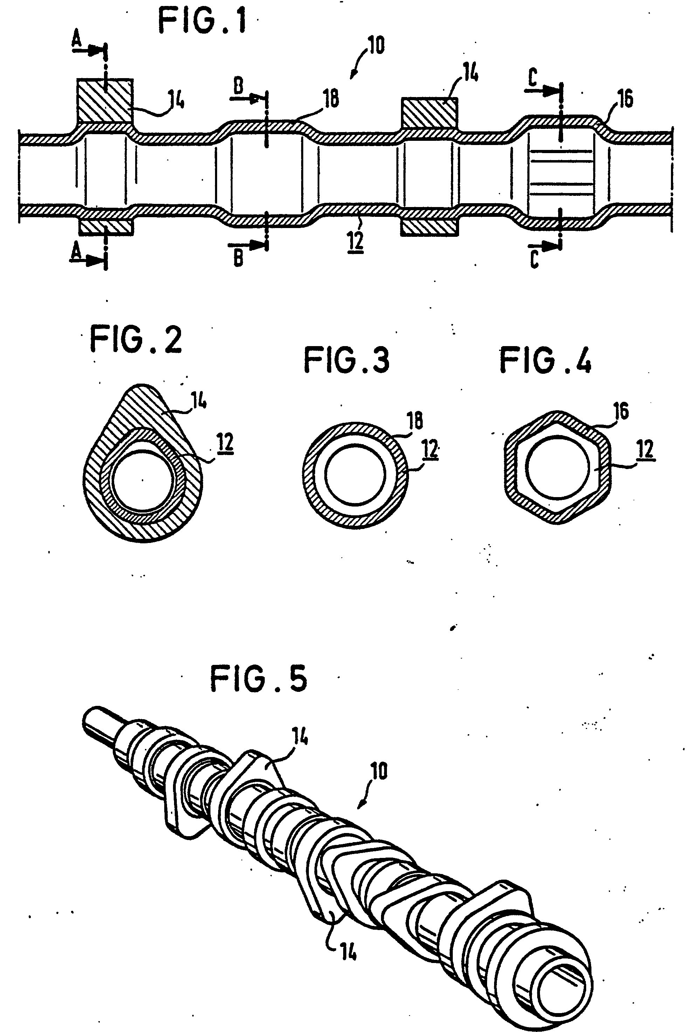

Wie in Fig. 1 gezeigt, kann eine Hohlwelle 10 verschiedene Konstruktionselemente aufweisen. Hier durch Aufweiten des Rohrs 12, wie aus Fig. 2 ersichtlich, unter einem Nocken 14 mit einer ovalen Nockenbohrung mit diesem Konstruktionselement drehfest verbunden. Der Nocken 14 ist sowohl über den Kraftschluß Rohrwand/Nockenbohrungsinnenwand - als auch über den Formschluß (oval) auf dem Rohr 12 befestigt. Gleichzeitig wurde ein Lager 18 im Rohr 12 ausgeformt, wie im Querschnitt in Fig. 3 dargestellt.

Es ist auch die gleichzeitige Anformung eines Einstellsechskants 16, wie er im Querschnitt in Fig.4 dargestellt ist, möglich.

Die hole Nockenwelle 10 ermöglicht die Übertragung von vergleichsweise großen Drehmomenten bei geringem Gewicht und guten Laufeigenschaften.

**Patentansprüche**

1. Hohlwelle mit Drehmoment übertragenden Konstruktionselementen, wie Zahnräder, Kurven, Nocken od. dgl., sowie gegebenenfalls Nebenformelementen, wie Lagerstellen, Anschlagflächen, Sechskant- oder Ringkonturen od. dgl., aus einem Ausgangsrohr mit im wesentlichen gleicher Wandstärke, das zur kraft- und formschlüssigen Verbindung mit den Konstruktionselementen und zur Ausformung der Nebenformelemente durch Innendruck aufgeweitet ist, wobei die maximale Aufweitung des Rohrs unter den Konstruktionselementen bzw. an den Nebenformelementen vorliegt, dadurch gekennzeichnet, daß die Wandstärke des Rohrs (12) unter den Konstruktionselementen (14, 18) und gegebenenfalls Nebenformelementen (16, 20) gegenüber der Wandstärke des Ausgangsrohrs durch Materialführung in axialer Richtung partiell vergrößert ist.

2. Hohlwelle nach Anspruch 1 mit Nebenformelementen, dadurch gekennzeichnet, daß die partielle Vergrößerung der Wandstärke des Rohres ausschließlich unter den Konstruktionselementen (14, 18) vorliegt.

3. Hohlwelle nach Anspruch 1 , dadurch gekennzeichnet, daß die Wanddickenvergrößerung des Rohres (12) unter den Konstruktionselementen (14, 18) und ggf. unter den Nebenformelementen (16, 20) zwischen 1 bis 10 %, bevorzugt 2 und 8 % und ganz besonders bevorzugt zwischen 3 und 7,5 % mehr als die Ausgangswandstärke des Rohres (12) beträgt.

4. Hohlwelle nach einem der vorangehenden Ansprüche, dadurch gekennzeichnet, daß die Konstruktionselemente (14, 18) vorzugsweise aus Hartguß, Schalenhartguß, Sinterstahl, Stahl (z.B. Feinstanzteil oder Profilstahl), Aluminium, Titan, Keramik oder Kunststoff sind.

5. Verfahren zur Herstellung einer Hohlwelle nach einem der vorangehenden Ansprüche mit folgenden Schritten:

Einlegen der/s Konstruktionselemente/s und eines durch die Innenöffnung der Konstruktionsele-

mente geschobenen Rohres in eine Form;
Schließen der Form;
Schließen der Rohrstirnseiten und
Aufbringen eines zur Verformung des Rohrmaterials ausreichenden Drucks im Inneren des Rohres, dadurch gekennzeichnet, daß gleichzeitig mit der Aufbringung von Innendruck Axialkräfte auf das Rohr unter Materialnachführung in Richtung der Rohrachse aufgebracht werden, wobei das Materialnachführen mittels in Rohrachsenrichtung bewegbarer Werkzeugelemente erfolgt.

**Claims**

1. Hollow shaft with torque-transmitting construction elements, such as toothed wheels, curves, cams and the like, as well as supplementary-shape elements, such as mounts, stops, hexagonal- or ring contours or the like, comprising a basic tube of substantially even wall thickness, widened for power-transmitting and sealing connection to the construction elements and for shaping the supplementary-shape elements by means of interior pressure, whereby the maximum widening of the tube occurs under the construction elements or on the supplementary-shape elements respectively, characterised in that the wall thickness of the tube (12) under the construction elements (14, 18) and, if appropriate the supplementary-shape elements (16, 20), is partially increased relative to the wall thickness of the basic tube by material guidance in the axial direction.

2. Hollow shaft according to claim 1 including supplementary-shape elements, characterised in that partial enlargement of the wall thickness of the tube is present exclusively under the construction elements (14, 18).

3. Hollow shaft according to claim 1, characterised in that the increase in wall thickness of the tube (12) under the construction elements (14, 18) and, if appropriate, under the supplementary-shape elements (16, 20) lies between 1 to 10%, preferably between 2 and 8%, and especially preferred between 3 and 7.5% over that of the basic wall thickness of the tube (12).

4. Hollow shaft according to one of the above claims, characterised in that the construction elements (14, 18) are preferred to be of chill casting, shell moulding, sintered steel, steel (for example precision stamping or forming), aluminium, titanium, ceramics or synthetics material.

5. Method for the manufacture of a hollow shaft according to one of the above claims in the following stages:
insertion of the contruction element(s) and a tube, pushed through the inner opening of the construction elements, into a form;
closing the form;
closing the tube-ends; and
application of a pressure, sufficient for shaping the tube material, inside the tube
characterised in that simultaneously with the application of inside pressure axial forces are applied to the tube whilst moving the material in the direction of the tube axis, whereby the material is moved by means of tool elements which are displaceable in the direction of the tube axis.

**Revendications**

1. Arbre creux avec éléments de construction transmettant un moment de rotation, tels qu'engrenages, courbes, cames ou éléments analogues ainsi que, éventuellement, des éléments structurels secondaires tels que emplacements de palier, surfaces de butée, profils hexagonaux ou profils annulaires ou analogues, au départ d'un tube servant de matière de départ, avec une épaisseur de paroi essentiellement identique, qui est élargi par une pression intérieure pour réaliser un assemblage mécanique par serrage et par adaptation des formes avec les éléments de construction et pour former les éléments structurels secondaires, tandis que l'élargissement maximal du tube a lieu sous les éléments de construction ou aux éléments structurels secondaires, caractérisé en ce que l'épaisseur de paroi du tube (12) est partiellement augmentée sous les éléments de construction (14, 18) et, éventuellement, sous les éléments structurels secondaires (16, 20) par rapport à l'épaisseur de paroi du tube de départ, par suite d'un déplacement de matière en direction axiale.

2. Arbre creux selon la revendication 1, avec des éléments structurels secondaires, caractérisé en ce que l'augmentation partielle de l'épaisseur de paroi du tube se produit exclusivement sous les éléments de construction (14, 18).

3. Arbre creux selon la revendication 1, caractérisé en ce que l'augmentation de l'épaisseur de paroi du tube (12) sous les éléments de construction (14, 18) et, éventuellement sous les éléments structurels secondaires (16, 20), est comprise entre 1 et 10% et, de préférence entre 2 et 8% et, plus particulièrement encore, entre 3 et 7,5% par rapport à l'épaisseur initiale du tube (12).

4. Arbre creux selon l'une des revendications précédentes, caractérisé en ce que les éléments de constructions (14, 18) sont réalisés, de préférence, en fonte dure, en fonte dure coulée en coquille, en acier fritté, en acier (par exemple pièce découpée de précision ou profil d'acier), en aluminium, en titane, en céramique, en matière plastique;

5. Procédé de fabrication d'un arbre creux, selon l'une des revendications précédentes, comportant les phases suivantes:
Insertion dans un moule du ou des éléments de construction et d'un tube glissé dans l'orifice intérieur des éléments de construction;
Fermeture du moule;
Fermeture des faces frontales du tube, et
Application à l'intérieur du tube, d'une pression suffisante pour déformer le matériau du tube;
caractérisé en ce que des forces axiales sont appliquées au tube en même temps que l'application de la pression intérieure, avec déplacement de matière en direction de l'axe du tube, tandis que le déplacement de matière est obtenu au moyen d'éléments d'outils pouvant se déplacer dans la direction de l'axe du tube.

FIG.1

FIG.2

FIG.3

FIG.4

FIG.5